# FASCICULE DE BREVET EUROPEEN

(11) **EP 0 396 445 B1**
(45) Date de publication et mention de la délivrance du brevet: **16.06.1993**
(21) Numéro de dépôt: 90401060.0
(22) Date de dépôt: 19.04.1990
(51) Int. Cl.: C08F 214/22, C09D 127/16

(54) **Copolymère durcissable fluoré, son procédé de fabrication et son application dans les vernis et peintures**
Härtbare fluorierte Copolymere, ihr Herstellungsverfahren und ihre Verwendung in Farben und Lacken
Curable fluorinated copolymers, their method of preparation and their use in lacquers and paints

(30) Priorité: 28.04.1989 FR 8905731
(43) Date de publication de la demande: 07.11.1990
(73) Titulaire: ELF ATOCHEM S.A., 92800 Puteaux (FR)
(72) Inventeur: Kappler, Patrick, F-69130 Ecully (FR); Perillon, Jean-Luc, F-27300 Bernay (FR)
(74) Mandataire: Foiret, Claude Serge

(56) Documents cités:
- GB-A- 2 163 756
- GB-A- 2 189 794

## Description

La présente invention concerne un copolymère durcissable fluoré de fluorure de vinylidène (C₂H₂F₂), d'au moins un des monomères fluorés choisi parmi le tétrafluoroéthylène (C₂F₄), le chlorotrifluoroéthylène (C₂F₃Cl), l'hexafluoropropène (C₃F₆), et, d'un dérivé de l'acrylamide. Ce copolymère soluble dans les solvants organiques est particulièrement recommandé pour la fabrication de peintures et vernis.

Les polymères fluorés sont connus pour leurs bonnes propriétés mécaniques et leur excellente résistance aux produits chimiques et aux intempéries. Toutefois leur insolubilité dans les solvants classiques les rend inutilisables pour certaines applications dont par exemple celle de résine pour peintures et vernis où leurs propriétés sont recherchées pour la fabrication de revêtements de bonne résistance et d'entretien facile.

Afin de profiter des propriétés des polymères fluorés tout en évitant leurs inconvénients des moyens ont été recherchés pour les rendre solubles dans les solvants organiques classiques. Pour ce faire il est connu de diminuer la cristallinité des polymères fluorés par copolymérisation de monomères éthyléniquement insaturés dont un au moins est fluoré.

En outre pour utiliser de tels copolymères il est souhaitable pour certaines applications, en particulier par leur emploi dans la fabrication des peintures et vernis, de leur conserver un degré suffisant de rigidité et de les rendre durcissables par incorporation dans leur structure de groupes fonctionnels.

De tels copolymères durcissables fluorés sont décrits dans les FR 2 597 873 et 2 569 703. Ces produits sont obtenus par copolymérisation de chlorotrifluoroéthylène, d'ester d'acide gras et d'allylglycidyléther hydroxylé ou éthoxylé. Ces copolymères peuvent éventuellement contenir moins de 20 % d'un autre comonomère non fluoré. Si ces copolymères contiennent plus de 20 % du comonomère précédent ils perdent de leur solubilité dans les solvants et de leur transparence. En outre, l'introduction de fluor par l'intermédiaire du seul chlorotrifluoroéthylène amène également l'élément chloré qui n'est pas désirable en grande quantité pour les propriétés optiques et de résistance à la corrosion.

Dans le JP 59-174657/84 est également décrit un copolymère durcissable à base de fluorure de vinylidène, de tétrafluoroéthylène, de chlorotrifluoroéthylène, d'un ester vinylique et d'un agent d'hydroxylation. Ce copolymère contenant moins de 45 % du groupement de fluorure de vinyle éther et à base d'ester vinylique présente l'inconvénient de fournir après hydrolyse une solution de copolymère assez fortement colorée qui nuit à la transparence des vernis réalisés ultérieurement.

La présente invention a pour objet un copolymère fluoré facilement durcissable à chaud en présence éventuellement d'un agent durcissant. Ce copolymère en solution dans un solvant adapté à cette application peut être utilisé en tant que peinture ou vernis pour former des revêtements durs, stables et transparents en absence de pigments et possédant une excellente adhérence sur les métaux et le verre.

Le copolymère durcissable selon l'invention contenant les restes de copolymérisation d'un monomère fluoré et d'un dérivé de l'acrylamide est caractérisé en ce que :
- les restes de monomère fluoré proviennent de l'association de fluorure de vinylidène et d'un autre monomère fluoré choisi parmi le tétrafluoroéthylène, la chlorotrifluoroéthylène, l'hexafluoropropène et le mélange d'au moins deux des trois monomères
- et en ce que le dérivé de l'acrylamide est choisi parmi les composés de formule : 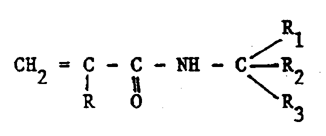 dans laquelle :
   R = H, CH₃
   R₁ = H, CH₃, O(̵CH₂₎ₙ-H, 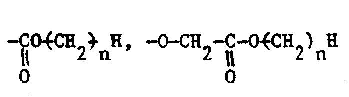 R₂ = H, CH₃, O(̵CH₂)ₙ-H, 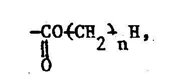 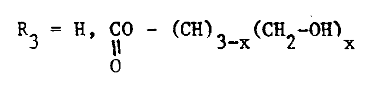 avec :
   n représentant un nombre de 0 à 8
   et x représentant un nombre de 0 à 3

L'association pour 100 moles de l'ensemble des monomères fluorés est formée de :
- 50 à 98 moles de fluorure de vinylidène et de
- 2 à 50 moles de l'autre monomère fluoré tel que défini.

Le copolymère durcissable fluoré selon l'invention est caractérisé en ce qu'il comprend les restes des monomères provenant de :
- 50 à 98 moles et mieux de 70 à 85 moles de fluorure de vinylidène
- 2 à 50 moles et mieux de 15 à 20 moles de monomère fluoré choisi parmi le tétrafluoroéthylène, le chlorotrifluoroéthylène, l'hexafluoropropène et un mélange d'au moins deux des trois monomères
- 2 à 30 moles et mieux de 5 à 10 moles de dérivé de l'acrylamide précédent pour 100 moles de l'ensemble des monomères fluorés.

Parmi les dérivés de l'acrylamide préférés peuvent être cités les composés de formule :

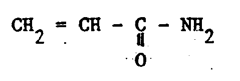

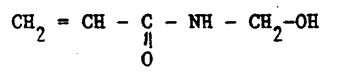

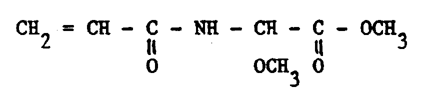

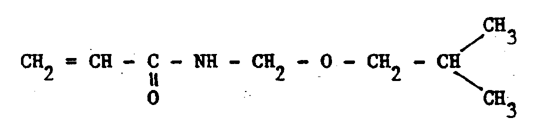

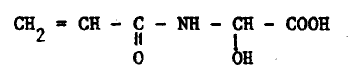

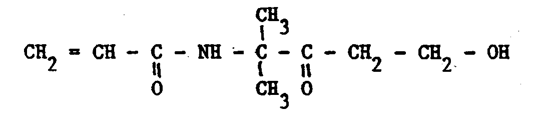

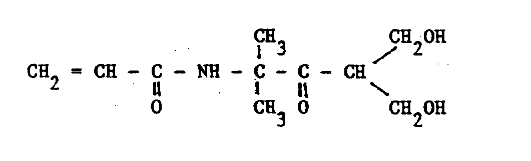

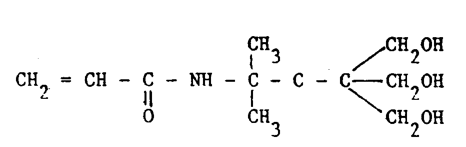

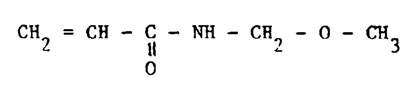

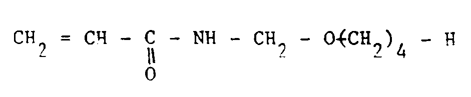

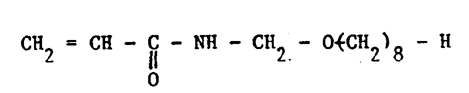

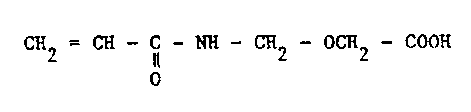

Il n'est bien entendu pas exclu d'associer plusieurs de ces dérivés de l'acrylamide en particulier un dérivé alkoxylé et un dérivé hydroxylé.

Afin de pouvoir utiliser ces copolymères dans une composition liquide de revêtement telle que peinture ou vernis il est recommandé que la viscosité inhérente du copolymère dissous dans la diméthyle formamide à 25°C à une concentration de 1 g/dl soit comprise dans les valeurs de 0,02 à 0,2 dl/g.

Le copolymère selon l'invention est principalement obtenu selon le procédé connu de polymérisation en solution. Le procédé consiste à copolymériser les monomères, en milieu solvant de l'ensemble des monomères en présence d'un initiateur organosoluble, à une température comprise entre environ 30 et 120°C et de préférence entre 40 et 80°C sous une pression d'environ 10 à 80 bars et de préférence entre 15 et 40 bars.

Selon l'invention le copolymère durcissable est obtenu par copolymérisation de fluorure de vinylidène, d'au moins un autre monomère fluoré choisi parmi le tétrafluoroéthylène, le chlorotrifluoroéthylène, l'hexafluoropropène et, de dérivé de l'acrylamide tel que défini précédemment. Pour 100 moles de monomères fluorés polymérisés sont utilisées :
- 50 à 98 moles de fluorure de vinylidène
- 2 à 50 moles de tétrafluoroéthylène ou de chlorotrifluoroéthylène ou d'hexafluoropropène ou d'un mélange d'au moins deux des trois monomères auxquelles sont associées le dérivé de l'acrylamide tel que déjà défini.

Afin d'obtenir un copolymère durcissable possédant les meilleures propriétés, on associe de 2 à 30 moles de dérivé de l'acrylamide tel que défini pour 100 moles de l'ensemble des monomères fluorés.

Selon un mode de copolymérisation préféré le solvant est chauffé à la température de réaction choisie dans un réacteur agité préalablement dégazé. Un mélange de monomères fluorés ainsi qu'une fraction initiale du dérivé de l'acrylamide sont introduits dans le réacteur.

La quantité de mélange de monomères à introduire pour atteindre la pression de réaction choisie dépend des conditions de solubilité des monomères fluorés dans le solvant choisi. Le rapport pondéral monomère/solvant est en général compris entre 0,1 et 1.

Lorsque la pression de réaction et la température de réaction sont atteintes on introduit dans le réacteur l'initiateur de la polymérisation. La formation de polymère se traduit par une baisse de pression que l'on compense par l'ajout de mélange de monomères fluorés.

On peut ajouter un mélange de monomères fluorés de composition molaire identique à celle que l'on a introduite initialement. On peut également tenir compte des réactivités propres de chaque comonomère et ajuster la composition du mélange rajouté au cours de la polymérisation pour faire un copolymère de composition homogène.

Le dérivé de l'acrylamide peut également être ajouté en cours de polymérisation. Le taux de ce dérivé ajouté en continu est en général supérieur au taux de dérivé de l'acrylamide mis au départ, pour tenir compte de la réactivité plus grande de ces dérivés.

Le dérivé d'acrylamide est ajouté de telle sorte que la composition du mélange de monomères fluorés et de dérivé d'acrylamide introduits reste constante pendant la durée de la polymérisation.

L'ajout du mélange de monomères pour maintenir la pression, est poursuivi suffisamment longtemps pour atteindre un extrait sec de l'ordre de 10 à 60 %, de préférence de 15 à 40 %.

Les monomères résiduaires volatiles peuvent être éliminés par dégazage.

La solution finale est extraite du réacteur et peut être conservée telle quelle. Elle peut encore être concentrée immédiatement ou ultérieurement de façon à obtenir la quantité d'extrait sec choisie pour l'utilisation du copolymère.

Les solvants choisis pour la réaction de copolymérisation doivent permettre de solubiliser le mélange des monomères tout en restant inertes vis à vis des autres composants réactionnels. Ils sont choisis de préférence parmi les acétates et les alcools ou leurs mélanges, les cétones et les étheralcools. L'acétate d'éthyle, l'acétate de butyle, le méthanol ou tertiobutanol sont particulièrement retenus. Lorsque le copolymère est préparé dans le but d'une application dans les formulations pour peinture ou vernis, un mélange d'acétate de butyle et de méthanol employé comme solvant lors de la copolymérisation peut permettre d'obtenir directement, sans traitement ultérieur, une composition utilisable telle quelle après éventuellement élimination du méthanol et ajout des additifs complémentaires habituels à ces types de formulation.

Les initiateurs de copolymérisation sont connus en eux-mêmes, les plus courants étant choisis parmi les initiateurs de polymérisation radicalaire comme les perdicarbonates, les perpivalates et les composés azo, tels que le percarbonate de diisospropyle ou de dicyclohexyle, le perpivalate de tertiobutyle ou de tertioamyle, l'azobisisobutyronitrile et l'azo-bis-2,2-diméthylvaléronitrile.

Lorsque le copolymère réticulable selon l'invention doit être utilisé comme base dans la formulation pour peinture ou vernis il peut, comme déjà signalé, être utilisé tel quel dans son milieu solvant réactionnel initial. Il peut également être plus ou moins concentré et remis en solution dans un solvant mieux adapté au type de peinture ou vernis souhaité. Tel quel, le copolymère en milieu solvant donne une solution incolore et transparente. A cette solution peuvent être ajoutés les additifs souhaités tels que pigment, charges, diluants, agent absorbant les ultra-violets, agent stabilisant ou encore agent de durcissement améliorant la réaction de durcissement par réticulaiton à chaud. Parmi les agents de durcissement les plus connus peuvent être cités la mélamine formol, l'urée formol, les époxydes, les isocyanates, les acides organiques ou leurs anhydrides. La température de réticulation de ces copolymères est généralement comprise entre 0 et 260°C et dépend essentiellement de la nature chimique du durcisseur et des conditions de mise en oeuvre.

Les exemples suivants illustrent l'invention sans toutefois la limiter.

### EXEMPLE 1

Dans un autoclave de 3,3 l muni d'une agitation efficace on introduit après dégazage sous vide, 2 litres de méthanol. L'autoclave est porté à une température de 50°C. A cette température on ajoute 440 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 4 g. d'N-méthylolacrylamide, puis 5 g. de perdicarbonate de cyclohexyle.

Pour maintenir la pression à 20 bars on ajoute pendant 5 heures 540 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 16 g. de N-méthylolacrylamide.(NMA)

Après 5 heures de polymérisation l'autoclave est dégazé et on vidange une solution transparente de copolymère dont l'extrait sec est de 25 %. Le copolymère contient des motifs fluorés provenant du fluorure de vinylidène, du tétrafluoroéthylène et du chlorotrifluoroéthylène dans les proportions molaires respectives de 81/13/7 déterminés par RMN (Résonance magnétique nucléaire) du Fluor 19. Le taux molaire de N-méthylolacrylamide dans le copolymère est de 2,6 % molaire par rapport à la totalité des motifs fluorés. La viscosité inhérente du copolymère est de 0,0437 dl/g.

### EXEMPLE 2

Dans un autoclave de 3,3 l muni d'une agitation efficace on introduit après dégazage sous vide, 2 litres de méthanol. L'autoclave est porté à une température de 50°C. A cette température on ajoute 436 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 13,6 g. de méthylacrylamidoglycolateméthyléther, (MAGME) puis 5 g. de perdicarbonate de cyclohexyle.

Pour maintenir la pression à 20 bars on ajoute pendant 6 heures 440 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 41 g. de méthylacrylamidoglycolateméthyléther.

Après 6 heures de polymérisation l'autoclave est dégazé et on vidange une solution transparente de copolymère dont l'extrait sec est de 22 %. Le copolymère contient des motifs fluorés provenant du fluorure de vinylidène, du tétrafluoroéthylène et du chlorotrifluoroéthylène dans les proportions molaires respectives de 81/13/7 déterminés par RMN du Fluor 19. Le taux molaire de méthylacrylamidoglycolateméthyléther dans le copolymère est de 5 % molaire par rapport à la totalité des motifs fluorés. La viscosité inhérente du copolymère est de 0,0483 dl/g.

### EXEMPLE 3

Dans un autoclave de 3,3 l muni d'une agitation efficace on introduit après dégazage sous vide, 2 litres de méthanol. L'autoclave est porté à une température de 50°C. A cette température on ajoute 440 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 11,5 g. d'acide acrylamidoglycolique, puis 5 g. de peroxydicarbonate de cyclohexyle.

Pour maintenir la pression à 20 bars on ajoute pendant 3 heures 350 g. de mélange de monomères fluorés contenant du fluorure de vinylidène, du tétrafluoroéthylène et du chlorotrifluoroéthylène dans les proportions molaires respectives de 79/15/6.

Simultanément on ajoute en continu sur la même durée de polymérisation 23 g. d'acide acrylamideglycolique.

Après 3 heures de polymérisation l'autoclave est dégazé et on vidange une solution transparente de copolymère dont l'extrait sec est de 17,3 %. Le copolymère contient des motifs fluorés provenant du fluorure de vinylidène, du tétrafluoroéthylène et du chlorotrifluoroéthylène dans les proportions molaires respectives de 81/13/7 déterminés par RMN du Fluor 19. Le taux molaire d'acide acrylamidoglycolique dans le copolymère est de 4,1 % molaire par rapport à la totalité des motifs fluorés. La viscosité inhérente du copolymère est de 0,046 dl/g.

### EXEMPLE 4

Dans un autoclave de 3,3 l muni d'une agitation efficace on introduit après dégazage sous vide, 2 litres de méthanol. L'autoclave est porté à une température de 50°C. A cette température on ajoute 450 g. de mélange de monomères fluorés contenant du fluorure de vinylidène, du tétrafluoroéthylène et de l'hexafluoropropène pour atteindre 20 bars de pression dans les proportions molaires respectives de 75/15/10.

On ajoute ensuite 13,6 g. de méthylacrylamidoglycolateéthyléther, (MAGME) puis 5 g. de perdicarbonate de cyclohexyle.

Pour maintenir la pression à 20 bars on ajoute pendant 6 heures 400 g. de mélange de monomères fluorés contenant du fluorure de vinylidène, du tétrafluoroéthylène et de l'hexafluoropropène dans les proportions molaires respectives de 75/15/10.

Simultanément on ajoute en continu sur la même durée de polymérisation 41 g de méthylacrylamideglycolateméthyléther.

Après 6 heures de polymérisation l'autoclave est dégazé et on vidange une solution transparente de copolymère dont l'extrait sec est de 20,5 %. Le copolymère contient des motifs fluorés provenant du fluorure de vinylidène, du tétrafluoroéthylène et de l'hexafluoropropène dans les proportions molaires respectives de 79/15/6 déterminés par RMN du Fluor 19. Le taux molaire de méthylacrylamidoglycolateméthyléther dans le copolymère est de 5,1 % molaire par rapport à la totalité des motifs fluorés. La viscosité inhérente du copolymère est de 0,0506 dl/g.

### EXEMPLE 5

Dans un autoclave de 3,3 l muni d'une agitation efficace on introduit après dégazage sous vide, 2 litres de méthanol. L'autoclave est porté à une température de 50°C. A cette température on ajoute 440 g. de mélange de monomères fluorés contenant du fluorure de vinylidène, du tétrafluoroéthylène et du chlorotrifluoroéthylène pour atteindre 20 bars de pression dans les proportions molaires respectives de 79/15/6.

On ajoute ensuite 13,6 g. de méthylacrylamidoglycolateméthyléther (MAGME), puis 4 g. de N-méthylolacrylamide (NMA), puis 75 g de perdicarbonate de cyclohexyle.

Pour maintenir la pression à 20 bars on ajoute pendant 5 heures 440 g. de mélange de monomères fluorés contenant du fluorure de vinylidène, du tétrafluoroéthylène et du chlrorotrifluoroéthylène dans les proportions molaires respectives de 79/15/6.

Simulatanément on ajoute en continu sur la même durée de polymérisation 41 g. de méthylacrylamidoglycolateméthyléther et 12 g de N'méthylolacrylamide.

Après 5 heures de polymérisation l'autoclave est dégazé et on vidange une solution transparente de copolymère pour l'extrait sec est de 22 %. Le copolymère contient des motifs fluorés provenant du fluorure de vinylidène, du tétrafluoroéthylène et du chlorotrifluoroéthylène dans les proportions molaires respectives de 82/12/6 déterminés par RMN du Fluor 19. Le taux molaire de MAGME et de NMA dans le copolymère sont de respectivement 5 et 2,5 % molaire par rapport à la totalité des motifs fluorés. La viscosité inhérente du copolymère est de 0,046 dl/g.

### EXEMPLE 6

Dans un autoclave de 3,3 l muni d'une agitation efficace on introduit après dégazage sous vide, 2 litres de mélange 1/1 en poids de méthanol et de tertiobutanol. L'autoclave est porté à une température de 50°C. A cette température on ajoute 550 g. de mélange de monomères fluorés contenant du fluorure de vinylidène et du chlorotrifluoroéthylène pour atteindre 20 bars de pression dans les proportions molaires respectives de 85/15.

On ajoute ensuite 13,6 g. de méthylacrylamidoglycolateméthyléther, (MAGME) puis 5 g. de perdicarbonate de cyclohexyle.

Pour maintenir la pression à 20 bars on ajoute pendant 6 heures 440 g. de mélange de monomères fluorés contenant du fluorure de vinylidène et du chlorotrifluoroéthylène dans les proportions molaires respectives de 75/25.

Simulatanément on ajoute en continu sur la même durée de polymérisation 49,5 g. de méthylacrylamidoglycolateméthyléther.

Après 6 heures de polymérisation l'autoclave est dégazé et on vidange une solution transparente de copolymère dont l'extrait sec est de 22,5 %. Le copolymère contient des motifs fluorés provenant du fluorure de vinylidène et du chlorotrifluoroéthylène dans les proportions molaires respectives de 75/25 déterminés par RMN du Fluor 19. Le taux molaire de méthylacrylamidoglycolateméthyléther dans le copolymère est de 5 % molaire par rapport à la totalité des motifs fluorés. La viscosité inhérente du copolymère est de 0,069 dl/g.

### EXEMPLE 7

Le copolymère fluoré de l'exemple 1 est chauffé sous vide jusqu'à évaporation du méthanol puis dilué par de la méthyléthylcétone.

On prépare un vernis par simple mélange des constituants
- copolymère fluoré (2,6 % de NMA et 49 % d'extrait sec dans la méthylisobutylcétone) 100
- résine mélamine formol partiellement méthylée (viscosité 7000 mPa.s à 90 % d'extrait sec dans l'isobutanol) 23,3
- acide p toluène sulfonique 0,2

Ce vernis est appliqué à la barre de 100 µm sur un support aluminium chromaté d'épaisseur 0,7 mm, puis étuvé pendant 30 minutes à 180°C pour donner un film d'épaisseur 25 µm. La réticulation est appréciée par le test de résistance à la méthyléthylcétone (MEC) dans lequel un coton imbibé de méthyléthylcétone est frotté avec un mouvement de va et vient sur le film jusqu'à abrasion de ce dernier. Un nombre d'aller retour compris entre 50 et 100 est l'indice d'une bonne réticulation. Un nombre égal à 100 ou plus est l'indice d'une réticulation excellente. La compatibilité du vernis est jugée par la transparence des films obtenus
- E = excellente: transparence totale
- B = bonne: léger voile
- M = mauvaise: film translucide

Le film réalisé précédemment résiste à plus de 100 allers retours à la MEC et offre une excellente transparence.

### EXEMPLE 8

On prépare une peinture dans les conditions suivantes :

On mélange 200 g. d'une solution dans la méthylisobutylcétone de copolymère de l'exemple 7 avec 98 g. de dioxyde de titane et 22 g.d'éthoxyéthylpropionate dans un disperseur à billes de manière à obtenir une pâte de broyage dont la finesse de broyage est inférieure à 10 µm.

On reprend 160 g. de cette pâte que l'on déconcentre avec 23,3 g. de résine de mélamine formol partiellement méthylée, 0,2 g. d'acide p toluène sulfonique et 30 g. d'éthoxyéthylpropionate pour donner une peinture blanche dont la viscosité à la coupe Ford n° 4 est de 85 secondes.

On applique cette peinture blanche sur aluminium chromaté au raclet spirale de 100 µm puis on étuve pendant 30 minutes à 180°C pour obtenir un film d'épaisseur 25 µm. La peinture obtenue résiste à plus de 100 allers retours à la méthyléthylcétone (MEC), possède un brillant Gardner mesuré à 60° de 42,2 %, une adhérence classe 0 déterminée selon la norme NFT 30 038 et n'est pas affectée par une exposition de 1000 h. au Q.U.V. Le Q.U.V. est un appareil de vieillissement accéléré. Les effets du soleil sont reproduits au moyen de quatre tubes émettant des rayonnements UV. La température pendant l'exposition aux UV est de 63°C. Un dispositif de condensation d'eau permet de maintenir le taux d'humidité à 100 % d'humidité relative pendant la phase de condensation. La température de l'échantillon pendant la phase de condensation est de 50°C. On alterne les phases de condensation et d'irradiation, chacune de 4 heures.

### EXEMPLE 9

Le copolymère fluoré de l'exemple 2 est chauffé sous vide jusqu'à évaporation du méthanol puis dilué par de la méthylisobutylcétone (MIBC).

On prépare un vernis par simple mélange des constituants
- copolymère fluoré (5 % molaire de MAGMEà 50 % d'extrait sec dans la méthylisobutylcétone) 100
- résine de mélamine formol partiellement méthylée (viscosité 7000 mPa.s à 90 % dans l'isobutanol 23,8
- acide p-toluène sulfonique 0,2

Le vernis est appliqué à la barre de 100 µm sur un support aluminium chromaté d'épaisseur 0,7 mm puis étuvé de manière à atteindre une température minimale de plaque (PMT) de 250°C pendant 45 secondes pour donner un film sec d'épaisseur 24 µm.

### EXEMPLE 10

On prépare une peinture dans les conditions suivantes :

On mélange 200 g. d'une solution dans la MIBC de copolymère de l'exemple 9 avec 64,2 g. d'un pigment bleu de cobalt et 31,5 g. d'éthoxyéthylpropionate dans un disperseur à billes de manière à obtenir une pâte de broyage dont la finesse de broyage est inférieure à 10 µm.

On reprend 148 g. de cette pâte pigmentaire que l'on déconcentre avec 23,8 g. de résine de mélamine formol partiellement méthylée, 0,2 g. d'acide paratoluène sulfonique et 20 g. d'éthoxyéthylpropionate pour obtenir une viscosité de 80 secondes à la coupe Ford n° 4 .

Cette peinture bleue est appliquée à la barre de 100 µm sur une plaque aluminium chromatée d'épaisseur 0,7 mm., puis étuvée de manière à atteindre une PMT de 250°C pendant 45 secondes pour donner un film sec d'épaisseur 23 µm.

La peinture obtenue résiste à plus de 100 allers retours à la MEC, possède un brillant Gardner mesuré à 60°C de 44 %, une adhérence classe 0 déterminée selon la norme NFT 30 038 et n'est pas affectée par une exposition de 1000 h. au Q.U.V.

### EXEMPLE 11

Le copolymère fluoré de l'exemple 3 est chauffé sous vide jusqu'à évaporation du méthanol puis dilué par du diacétone alcool.

On prépare un vernis par mélange des constituants
- copolymère fluoré (4,1 % molaire d'acide acrylamidoglycolique à 50 % dans le diacétone alcool) 100
- polyisocyanate cycloaliphatique bloqué (en solution à 60 % dans n-butylacétate/xylène teneur en NCO bloqué 8 %) 50,9
- dilaurate de dibutylétain 0,1

Le vernis est appliqué à la barre de 100 µm sur une plaque d'aluminium chromatée d'épaisseur 0,7 mm puis étuvé à 150°C pendant 30 minutes pour donner un film d'épaisseur 20 µm.

Ce film subit sans dommage 100 allers retours à la MEC et offre une excellente transparence.

### EXEMPLE 12

Le copolymère fluoré de l'exemple 4 est chauffé sous vide jusqu'à évaporation du méthanol puis dilué par la méthylisobutylcétone.

On prépare un vernis par simple mélange des constituants
- copolymère fluoré (5,1 % molaire de MAGME à 52 % d'extrait sec dans la méthylisobutylcétone (MIBC)) 100
- résine de mélamine formol partiellement méthylée (viscosité 7500 mPa.s à 90 % dans l'isobutanol) 24,8
- acide p toluène sulfonique 0,2

Le vernis est appliqué à la barre de 100 µm sur un support aluminium chromaté d'épaisseur 0,7 mm puis étuvé pendant 30 minutes à 180°C pour donner un film sec d'épaisseur 24 µm.

Ce film subit sans dommage 100 allers retours à la MEC et offre une excellente transparence.

### EXEMPLE 13

Le copolymère fluoré de l'exemple 5 est chauffé sous vide jusqu'à évaporation du méthanol puis dilué par de la méthylisobutylcétone.

On prépare un vernis par simple mélange des constituants
- copolymère fluoré (2,5 % NMA + 5 % MAGME à 50 % d'extrait sec dans la MIBC) 100
- acide p toluène sulfonique 0,2

Le vernis est appliqué à la barre de 150 µm sur un support aluminium chromaté d'épaisseur 0,7 mm puis étuvé pendant 30 minutes à 200°C pour donner un film sec d'épaisseur 19 µm.

Ce film subit sans dommage 100 allers retours à la MEC et offre une excellente transparence.

### EXEMPLE 14

Le copolymère fluoré de l'exemple 6 est chauffé sous vide jusqu'à évaporation du méthanol puis dilué par du diacétone alcool.

On prépare un vernis par simple mélange des constituants
- copolymère fluoré (5 % MAGME à 55 % d'extrait sec dans diacétone alcool) 100
- résine hexaméthoxyméthylmélamine 9,7
- acide p toluène sulfonique 0,2

Le vernis est appliqué à la barre de 100 µm sur un support aluminium chromaté de 0,7 mm puis étuvé de manière à atteindre une température minimale de plaque (PMT) de 250°C pendant 40 s pour donner un film sec d'épaisseur 23 µm.

Ce film subit sans dommage 100 allers retours à la MEC et offre une excellente transparence.

## Revendications

1. Copolymère durcissable contenant les restes de copolymérisation d'un monomère fluoré et d'un dérivé de l'acrylamide caractérisé en ce que :
a) les restes de monomère fluoré proviennent pour 100 moles de monomères fluorés de l'association de 50 à 98 moles de fluorure de vinylidène et de 2 à 50 moles d'au moins un des monomères fluorés choisi parmi le tétrafluoroéthylène, le chlorotrifluoroéthylène et l'hexafluoropropène ou d'un mélange d'au moins deux de ces trois monomères.
b) les restes de l'acrylamide proviennent de 2 à 30 moles pour 100 moles de l'ensemble des monomères fluorés d'un des composés de la formule : 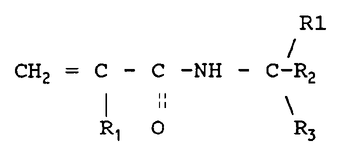 dans laquelle :
R = H ou CH₃
R₁ = H ou CH₃ ou 0-(CH₂)ₙ - H ou 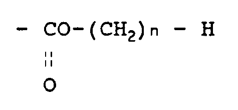 ou 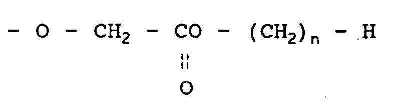 R₂ = H ou CH₃ ou 0 - (CH₂)ₙ - H ou 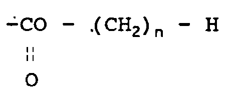 R₃ = H ou 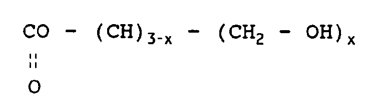 avec :
n représentant un nombre de 0 à 8
et x représentant un nombre de 0 à 3

2. Copolymère durcissable selon la revendication 1 caractérisé en ce que sa viscosité inhérente en solution dans la diméthyleformamide à 25° C en concentration de 1 g/dl est comprise dans les valeurs de 0,02 à 0,2 dl/g.

3. Copolymère durcissable selon l'une des revendications 1 ou 2 caractérisé en ce qu'il se présente en solution dans un solvant organique.

4. Solution selon la revendication 3 caractérisée en ce que le solvant est un alcool ou un acétate.

5. Procédé de fabrication de copolymère durcissable à base de monomère fluoré et de dérivé de l'acrylamide caractérisé en ce qu'on copolymérise pour 100 moles de l'ensemble des monomères fluorés :
- 50 à 98 moles de fluorure de vinylidène pour
- 2 à 50 moles de tétrafluoroéthylène et/ou de chlorotrifluoroéthylène et/ou d'hexafluoropropène
- 2 à 30 moles de dérivé de l'acrylamide tel que défini dans la revendication 1 et pour 100 moles de l'ensemble des monomères fluorés

6. Procédé selon la revendication 5 caractérisé en ce que la copolymérisation s'effectue en solution dans un solvant.

7. Procédé selon la revendication 6 caractérisé en ce que le solvant est un alcool, un acétate ou une cétone.

8. Procédé selon l'une des revendications 5 à 7, caractérisé en ce que la température de copolymérisation est comprise entre 30 et 120° C.

9. Procédé selon l'une des revendications 5 à 8, caractérisé en ce que la pression de copolymérisation est comprise entre 10 et 80 bars.

10. Peinture ou vernis obtenu à partir des compositions des revendications 1 à 4.

## Patentansprüche

1. Härtbares Copolymer, das Reste aus der Copolymerisation eines fluorierten Monomers und eines Acrylamid-Derivates enthält, dadurch gekennzeichnet, daß
a) die Reste des fluorierten Monomers aus der Assoziation von 50 bis 98 mol-Prozent Vinylidenfluorid und 2 bis 50 mol-Prozent mindestens eines fluorierten Monomers aus der Gruppe: Tetrafluorethylen, Chlortrifluorethylen und Hexafluorpropylen oder einer Mischung aus mindestens zwei dieser drei Monomere stammen,
b) die Acrylamid-Reste aus 2 bis 30 mol-Prozent Acrylamid, bezogen auf die Gesamtmenge an fluorierten Monomeren, stammen und folgender Formel entsprechen: 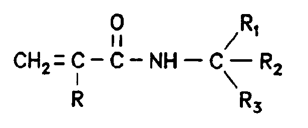 in welcher:
R = -H oder -CH₃
R₁ = -H, -CH₃, -O-(CH₂)ₙ-H, 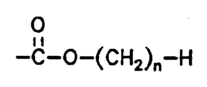 oder 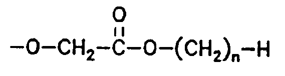 R₂ = -H, -CH₃, -O-(CH₂)ₙ-H oder 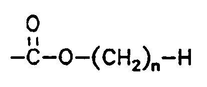 R₃ = -H oder -C-O-CH₃₋ₓ-(CH₂-OH)ₓ
wobei n eine Zahl zwischen 0 und 8 und x eine Zahl zwischen 0 und 3 darstellt.

2. Härtbares Copolymer nach Anspruch 1, dadurch gekennzeichnet, daß seine innere Viskosität in Dimethylformamid-Lösung bei 25°C und einer Konzentration von 1 g/dl zwischen 0,02 und 0,2 dl/g beträgt.

3. Härtbares Copolymer nach einem der Ansprüche 1 oder 2, dadurch gekennzeichnet, daß es in einem organischen Lösungsmittel gelöst vorliegt.

4. Lösung nach Anspruch 3, dadurch gekennzeichnet, daß das Lösungsmittel ein Alkohol oder ein Acetat ist.

5. Verfahren zur Herstellung eines härtbaren Copolymers auf der Basis fluorierter Monomere und von Acrylamid-Derivaten, dadurch gekennzeichnet, daß pro 100 mol Gesamtmenge an fluorierten Monomeren
- 50 bis 98 mol Vinylidenfluorid und
- 2 bis 50 mol Tetrafluorethylen und/oder Chlortrifluorethylen und/oder Hexafluorpropylen sowie
- 2 bis 30 mol des Acrylamid-Derivats wie in Anspruch 1 definiert und ebenfalls auf 100 mol Gesamtmenge an fluorierten Monomeren bezogen copolymersiert werden.

6. Verfahren nach Anspruch 5, dadurch gekennzeichnet, daß die Copolymerisation in Lösung durchgeführt wird.

7. Verfahren nach Anspruch 6, dadurch gekennzeichnet, daß das Lösungsmittel ein Alkohol, ein Acetat oder ein Keton ist.

8. Verfahren nach einem der Ansprüche 5 bis 7, dadurch gekennzeichnet, daß die Temperatur, bei der die Copolymerisation durchgeführt wird, zwischen 30 und 120°C beträgt.

9. Verfahren nach einem der Ansprüche 5 bis 8, dadurch gekennzeichnet, daß der Druck, bei dem die Copolymerisation durchgeführt wird, zwischen 10 und 80 bar beträgt.

10. Farben oder Lacke, die ausgehend von den Zusammensetzungen der Ansprüche 1 bis 4 erhalten werden.

## Claims

1. A hardenable copolymer containing the copolymerization residue of a fluorinated monomer and an acrylamide derivative,
**characterised in that**
a) the residue of fluorinated monomer comes from, for 100 moles of fluorinated monomers, the association of 50 to 98 moles of vinylidene fluoride and 2 to 50 moles of at least one of the fluorinated monomers chosen from tetrafluoroethylene, chlorotrifluoroethylene and hexafluoropropene or a mixture of a least two of these three monomers.
b) the acrylamide residue comes from 2 to 30 moles for 100 moles of all the fluorinated monomers of one of the compounds having the formula: 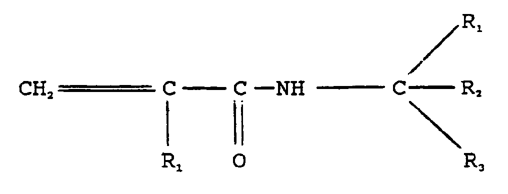 in which:
R = H or CH₃
R₁ = H or CH₃ or O(̵CH₂ 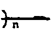 H or 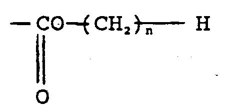 or 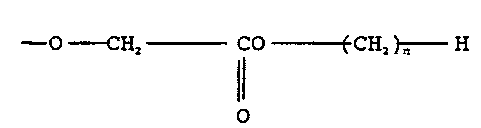 R₂ = H or CH₃ or O 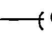 CH 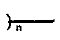 H or 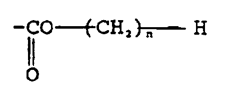 R₃ = H or 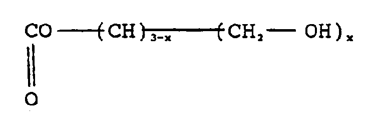 with:
n representing a number from 0 to 8
and x representing a number from 0 to 3.

2. A hardenable copolymer according to Claim 1,
**characterised in that** its inherent viscosity in solution in dimethylformamide at 25 °C in concentration of 1 g/dl is between the values of 0.02 to 0.2 dl/g.

3. A hardenable copolymer according to one of Claims 1 to 2,
**characterised in that** it is found in solution in an organic solvent.

4. A solution according to Claim 3,
**characterised in that** the solvent is an alcohol or an acetate.

5. A process for manufacturing a hardenable copolymer based on a fluorinated monomer and an acrylamide derivative,
**characterised in that** per 100 moles of all the fluorinated monomers
- 50 to 98 moles of vinylidene fluoride for
- 2 to 50 moles of tetrafluoroethylene and/or chlorotrifluoroethylene and/or hexafluoropropene
- 2 to 30 moles of acrylamide derivative such as defined in Claim 1 and for 100 moles of all the fluorinated monomers
are copolymerized.

6. A process according to Claim 5,
**characterised in that** copolymerization is performed in solution in a solvent.

7. A process according to Claim 6,
**characterised in that** the solvent is an alcohol, an acetate or a ketone.

8. A process according to one of Claims 5 to 7,
**characterised in that** the copolymerization temperature is between 30 and 120 °C.

9. A process according to one of Claims 5 to 8,
**characterised in that** the copolymerization pressure is between 10 and 80 bars.

10. A paint or varnish obtained from the compositions of Claims 1 to 4.
